# DEMANDE DE BREVET EUROPEEN

(11) **EP 1 401 175 A1**
(43) Date de publication de la demande: **24.03.2004**
(21) Numéro de dépôt: 03292071.2
(22) Date de dépôt: 22.08.2003
(51) Int. Cl.: H04L 29/06

(54) **Procédé d'interception de données de contrôle, notamment de qualité de service, et dispositif associé**

(30) Priorité: 23.09.2002 FR 0211722
(71) Demandeur: ALCATEL, 75008 Paris (FR)
(72) Inventeur: Couturier, Alban, 92320 Chatillon (FR); Jouenne, Franck, 77330 Ozoir-La-Ferriere (FR)
(74) Mandataire: Chaffraix, Sylvain

(57) **Abrégé**

Un dispositif comporte des moyens d'interception (2) capables, en cas de transfert de paquets de données entre au moins deux terminaux distants (Tijk), via un réseau de communications, d'intercepter certains au moins des paquets de contrôle pendant le transfert, et de déterminer parmi les paquets de contrôle interceptés ceux qui sont formatés selon un protocole choisi de contrôle de transfert de données en temps réel, et des moyens de gestion (3) capables de dupliquer une partie au moins de chaque paquet de contrôle intercepté, et de générer des données, représentatives de la partie dupliquée, destinées à être communiquées à des moyens de contrôle (1 ) implantés dans une application de contrôle (S) du réseau.

## Description

L'invention concerne le domaine des communications entre terminaux au sein d'un réseau, et plus particulièrement celui du contrôle des données échangées entre terminaux.

Certains opérateurs ou fournisseurs d'accès ont développé des procédés (ou applications) permettant à leurs clients d'échanger des paquets de données au sein d'un réseau de communications dans des conditions privilégiées (ou avec un certain niveau de qualité de service). Afin de permettre à ces clients de vérifier (ou contrôler) les conditions réelles de transfert de données de type « flux » (ou « stream » en anglais), notamment dédiés à la video et à la voix, et vehiculés, par exemple, selon le protocole RTP (pour Real-time Transfert Protocol), on utilise le protocole RTCP (pour Real-time Transfert Control Protocol). Ce protocole, développé pour le contrôle du transfert de données en temps réel (surtout audio et/ou vidéo), permet notamment à l'émetteur d'un flux de recevoir en temps réel des informations caractérisant le transfert de données, telles que le pourcentage de paquets de données perdus, ou la variation de délai de transmission des paquets. Le protocole RTP encapsule les données, numérote et horodate les paquets, et des paquets RTCP sont renvoyés par le récepteur du flux RTP à l'émetteur, pour lui communiquer des informations sur le transfert, principalement le nombre de paquets RTP perdus.

L'utilisateur, qui a éventuellement payé pour disposer de conditions privilégiées, peut ainsi, lorsqu'il n'est pas satisfait, interroger son opérateur (ou son fournisseur de service), pour obtenir des explications, ou des remises. Or, dans le cas des micro-flux (ou échanges de données entre deux utilisateurs finaux), tels que par exemple les sessions vidéo classiques sur Internet, l'opérateur n'a que difficilement accès à des statistiques (en temps réel ou en différé) relatives à la qualité de la communication, si bien qu'il ne peut pas savoir qu'un problème de qualité est apparu, et donc ne peut pas réagir de façon appropriée (éventuellement en réfutant le plaignant).

L'invention a donc pour but de remédier à cet inconvénient.

Elle propose à cet effet un procédé d'interception des données de contrôle échangées par des terminaux distants, via un réseau de communications, sous la forme de paquets de contrôle formatés selon un premier protocole de contrôle de transfert de données en temps réel (tel que par exemple RTCP) et associées à des données précédemment échangées par ces terminaux (généralement sous la forme de paquets formatés selon un second protocole de transfert de données en temps réel (tel que par exemple RTP)). L'invention porte sur l'interception d'une partie au moins des paquets de contrôle, qui sont formatés selon le premier protocole et qui sont en cours de transfert, en vue d'une communication, immédiate ou différée, à une application de contrôle implantée dans le réseau, après duplication totale ou partielle de données représentatives des parties dupliquées, de sorte que l'application de contrôle en déduise des informations sur le transfert (en particulier la qualité de service dans le cas du protocole RTCP).

On entend ici par « duplication » le fait de récupérer des données pour les transmettre à une application, mais également le fait de stocker ces données dans des fichiers dits de journalisation (ou « log ») en vue d'un traitement différé.

Grâce à ce dispositif, reposant sur une duplication avec sélection éventuelle de données, un opérateur (ou un fournisseur d'accès) peut disposer en temps réel (ou en différé) des mêmes informations de transfert que ses clients.

Le procédé selon l'invention pourra comporter de nombreuses caractéristiques complémentaires qui pourront être prises séparément et/ou en combinaison, et en particulier :
- l'interception de tous les paquets de contrôle (par exemple RTCP) transférés, ou d'un paquet sur n (n étant une valeur entière choisie) ;
- une détermination des paquets dont au moins le champ d'adresse réseau du terminal ayant émis le paquet, le champ d'adresse réseau du terminal destinataire du paquet, le champ de port destinataire et/ou le champ de port émetteur, et le champ de numéro de protocole (comme par exemple UDP), présentent des valeurs choisies (ou filtres). Ces valeurs choisies (ou filtres) sont préférentiellement transmises par une application (éventuellement l'application de contrôle destinataire des données dupliquées) et/ou d'un autre équipement du réseau ;
- entre l'interception et la duplication, une comparaison entre une valeur seuil choisie et la valeur d'un champ d'informations de service contenu dans le paquet de contrôle intercepté (comportant, de préférence, des données représentatives de la qualité de service), afin de n'intercepter/dupliquer que les paquets de contrôle dont le champ d'informations de service présente une valeur sensiblement supérieure à la valeur seuil (notion de filtrage). Dans ce cas, on pourra dupliquer l'intégralité de chaque paquet de contrôle intercepté (et donc formaté selon le premier protocole) et présentant un champ d'informations de service ayant une valeur sensiblement supérieure à la valeur seuil, afin de communiquer l'intégralité du paquet de contrôle dupliqué. En variante, on pourra ne dupliquer que certains champs choisis contenus dans chaque paquet de contrôle intercepté (et donc formaté selon le premier protocole) et présentant un champ d'informations de service ayant une valeur sensiblement supérieure à la valeur seuil, afin de ne communiquer que les champs dupliqués. Préférentiellement, dans cette variante, on duplique également le(s) champ(s) d'informations de service, afin de le(s) communiquer avec les autres champs dupliqués. En variante, au lieu de communiquer le(s) champ(s) d'informations de service, on communique des données d'information qui le(s) représentent ;
- une duplication (sans filtrage) de l'intégralité de chaque paquet de contrôle intercepté (et donc formaté selon le premier protocole), ou en variante de certains champs choisis contenus dans chaque paquet de contrôle intercepté (et donc formaté selon le premier protocole), dont au moins le(s) champ(s) d'informations de service. En variante, au lieu de communiquer le(s) champ(s) d'informations de service, on communique des données d'informations qui le(s) représentent ;
- une duplication préférentielle des champs détectés d'adresse réseau du terminal ayant émis le paquet, d'adresse réseau du terminal destinataire du paquet, de port destinataire et/ou de port émetteur, et de numéro de protocole.

L'invention porte également sur un dispositif d'interception des données de contrôle échangées par des terminaux distants, via un réseau de communications, sous la forme de paquets de contrôle formatés selon un premier protocole de contrôle de transfert de données en temps réel (tel que par exemple RTCP) et associées à des données précédemment échangées par ces terminaux (généralement sous la forme de paquets formatés selon un second protocole de transfert de données en temps réel (tel que par exemple RTP)).

Plus précisément, le dispositif se caractérise par le fait qu'il comporte, d'une part, des moyens d'interception capables, en cas de transfert de paquets de données de contrôle entre au moins deux terminaux distants, d'intercepter ceux qui sont formatés selon le premier protocole, et d'autre part, des moyens de gestion capables de dupliquer une partie au moins de chaque paquet de contrôle intercepté, et de générer des données représentatives de la partie dupliquée, afin qu'elles soient communiquées (immédiatement ou en différé) à des moyens de contrôle implantés dans une application de contrôle du réseau.

Le dispositif selon l'invention pourra comporter de nombreuses caractéristiques complémentaires qui pourront être prises séparément et/ou en combinaison, et en particulier :
- des moyens d'interception agencés pour intercepter tous les paquets de contrôle transférés en vue de déterminer leur format, ou bien seulement un paquet sur n (n étant une valeur entière choisie), après avoir échantillonné (ou filtré) les paquets de contrôle ;
- des moyens d'interception agencés pour, d'une part, détecter parmi tous les paquets ceux dont au moins les champs d'adresse désignant le terminal ayant émis le paquet, le terminal destinataire du paquet, le port destinataire et/ou le port émetteur, et le numéro de protocole possèdent des valeurs choisies, et d'autre part, retenir les paquets présentant ces valeurs choisies (ou filtres), ceux-ci étant alors dits « paquets de contrôle interceptés ». Ces valeurs choisies (ou filtres) sont préférentiellement transmises au dispositif par une application (éventuellement l'application de contrôle destinataire des données dupliquées) ou d'un autre équipement du réseau ;
- des moyens d'interception agencés pour détecter au moins un champ d'informations de service contenu dans chaque paquet de contrôle intercepté, et pour effectuer, entre l'interception et la duplication, une comparaison entre une valeur seuil choisie stockée et la valeur du champ d'informations de service détecté (comportant des données représentatives de la qualité de service dans le cas du protocole RTCP, notamment), de sorte que les moyens de gestion ne dupliquent que la partie au moins du paquet de contrôle dont le champ d'informations de service présente une valeur sensiblement supérieure à la valeur seuil. Dans ce cas, les moyens d'interception sont préférentiellement agencés pour communiquer aux moyens de gestion l'intégralité de chaque paquet de contrôle intercepté ayant un champ d'informations de service présentant une valeur sensiblement supérieure à la valeur seuil, et les moyens de gestion sont préférentiellement agencés pour dupliquer l'intégralité de chaque paquet de contrôle intercepté reçu et communiquer aux moyens de contrôle l'intégralité du paquet de contrôle dupliqué. En variante, les moyens d'interception sont agencés pour communiquer aux moyens de gestion certains champs choisis contenus dans chaque paquet de contrôle intercepté ayant un champ d'informations de service présentant une valeur sensiblement supérieure à la valeur seuil, et les moyens de gestion sont agencés pour dupliquer les champs choisis de chaque paquet de contrôle intercepté reçu et communiquer aux moyens de contrôle les champs dupliqués. Préférentiellement, dans cette variante, les moyens de gestion dupliquent également le(s) champ(s) d'informations de service, afin de le(s) communiquer avec les autres champs dupliqués. En variante, au lieu de communiquer le(s) champ(s) d'informations de service, les moyens de gestion communiquent des données d'informations qui le(s) représentent ;
- des moyens de gestion agencés pour dupliquer certains champs choisis contenus dans chaque paquet de contrôle intercepté (et donc formaté selon le premier protocole), dont au moins un champ d'informations de service. Préférentiellement, les moyens de gestion sont agencés pour communiquer avec les autres champs dupliqués des données d'informations représentatives du champ d'informations de service dupliqué ;
- des moyens de gestion agencés pour dupliquer les champs détectés d'adresse réseau du terminal ayant émis le paquet de contrôle intercepté, d'adresse réseau du terminal destinataire du paquet intercepté, de port destinataire et de numéro de protocole, et pour communiquer ces champs dupliqués aux moyens de contrôle ;
- des moyens de gestion agencés pour dupliquer l'intégralité de chaque paquet intercepté (et donc formaté selon le premier protocole), et pour communiquer aux moyens de contrôle l'intégralité du paquet de contrôle dupliqué ;
- des moyens d'interception et/ou des moyens de gestion implantés dans l'un au moins des équipements du réseau par lesquels circulent les flux destinés aux terminaux. L'équipement peut être, par exemple, un pare-feu, un routeur, une « NAT box » (RFC 2663 et RFC 3022) ou un gestionnaire de trafic tel qu'un « traffic shaper ».

L'invention peut être mise en oeuvre dans tout type de réseau de communications, privé ou public, et en particulier dans les réseaux Internet. Par ailleurs, les premier et second protocoles selon lesquels sont formatés les paquets de données sont préférentiellement les protocoles RTCP et RTP, respectivement. D'autre part, la communication des données dupliquées peut s'effectuer selon le protocole COPS ou SNMP ou, mieux encore, selon un protocole d'encapsulation prenant les paquets RTCP retenus et les intégrant tels quels dans d'autres paquets, envoyés directement, immédiatement ou en différé, à l'application de vérification.

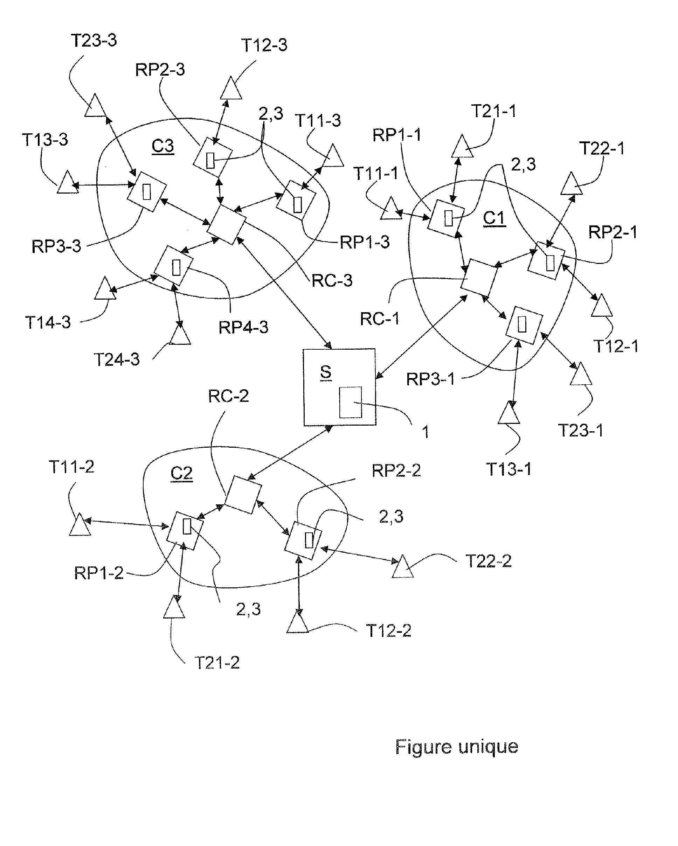

D'autres caractéristiques et avantages de l'invention apparaîtront à l'examen de la description détaillée ci-après, et du dessin annexé sur lequel l'unique figure illustre de façon schématique une installation de communications équipée d'un dispositif selon l'invention. Ce dessin pourra non seulement servir à compléter l'invention, mais aussi contribuer à sa définition, le cas échéant.

L'installation de communications illustrée sur l'unique figure comporte tout d'abord un serveur S raccordé à un réseau de communications, partiellement matérialisé par des flèches à double sens. A titre d'exemple non limitatif, on considère dans ce qui suit que le réseau est le réseau public Internet dans lequel les données sont échangées selon le protocole IP.

Comme illustré, dans cet exemple le réseau comporte des routeurs centraux RC-k raccordés au serveur S et à une multiplicité de routeurs périphériques (en anglais « edge router ») RPj-k. Des terminaux d'utilisateurs Tij-k sont raccordés aux différents routeurs périphériques RPj-k. Ces terminaux sont soit fixes, soit mobiles. Il peut s'agir, par exemple, d'ordinateurs, fixes ou portables, de téléphones, fixes ou portables, ou d'assistants personnels numériques (PDA).

On considère par ailleurs que les terminaux peuvent échanger en temps réel avec d'autres terminaux des sessions audio et/ou vidéo sous IP («VoIP ») ou des sessions multimédia sous IP (« MMoIP »). On considère également que ces terminaux utilisent les protocoles RTP (Real-time Transfert Protocol) et RTCP (Real-time Transfert Control Protocol) pour échanger les flux multimédia.

Ces protocoles étant bien connus de l'homme de l'art, ils ne seront pas présentés en détail. Il est simplement rappelé ici leurs principales fonctions et caractéristiques.

Le protocole RTP permet de fournir un moyen uniforme de transmission sur IP de données soumises à des contraintes de transfert en temps réel, soit de type « point à point » (ou « unicast » ; micro-flot entre deux terminaux), soit de type « multipoint » (ou « multicast » ; flot d'un terminal vers plusieurs terminaux). Il met en oeuvre des numéros de séquence de paquets IP qui permettent de reconstituer des informations audio et/ou vidéo, y compris lorsque le réseau change l'ordre des paquets. RTP permet ainsi d'ajouter aux paquets de données des marqueurs temporels, des numéros de séquence, d'identifier le type d'information transportée (identificateur unique de la source de synchronisation (SSRC)) et de contrôler l'arrivée des paquets à destination.

RTP est un protocole utilisant le protocole de transport sous-jacent UDP (User Datagram Protocol). Le protocole RTCP permet de contrôler les flux (ou flots) RTP. Il repose sur des transmissions périodiques de paquets de contrôle par les différents participants d'une session. Il permet donc d'acheminer des informations sur les participants et sur la qualité de service (« QoS »). Plus précisément, il permet de fournir des informations en retour (« feedback ») pour une source (terminal) ; il permet en outre de mettre en évidence des défauts de distribution individuels ou collectifs ; il permet également de garder une trace des différents participants (grâce à un identifiant unique et permanent pour chaque participant (CNAME) et à un identifiant de synchronisation de source (SSRC)) ; il permet de plus de contrôler le débit auquel les participants d'une session RTP transmettent leurs paquets RTCP ; il permet enfin de transmettre des informations de contrôle sur la session (par exemple pour identifier un participant sur les écrans des autres participants).

RTP et RTCP utilisent des ports séparés d'une paire de ports (habituellement le port pair pour RTP et le port impair immédiatement supérieur pour RTCP).

Comme présenté dans l'introduction, l'invention porte sur l'interception d'une partie au moins du flux de paquets de contrôle RTCP, en cours de transfert au sein du réseau. Dans ce qui suit, on entendra par « paquet de contrôle RTCP » un paquet de données de contrôle formaté selon le (premier) protocole RTCP. De même, on entendra par « paquet RTP » un paquet de données formaté selon le (second) protocole RTP.

Il s'agit en effet de détecter tous les paquets de contrôle RTCP, ou seulement une partie d'entre eux, pour les communiquer, après duplication totale ou partielle, soit sensiblement à l'identique soit sous la forme de données qui les représentent, à une application de contrôle 1 implantée dans le réseau, par exemple dans le serveur S de l'opérateur ou du fournisseur d'accès des utilisateurs. Cette application de contrôle 1 peut être un serveur de contrôle d'appel (tel que « SIP proxy » ou « H.323 gatekeeper »), ou tout autre type de contrôleur équivalent, comme par exemple un contrôleur de bande passante, qu'il soit sous la forme d'un matériel et/ou d'un logiciel. L'application de contrôle 1 peut alors en déduire des informations sur le transfert des paquets de données, comme par exemple la qualité de service (QoS), définie par un ou plusieurs champs de données d'informations de service (plus grand nombre de paquets reçus, nombre de paquets perdus, temps de transfert entre terminaux, gigue entre arrivées successives).

Pour atteindre cet objectif, on prévoit, tout d'abord au moins un module d'interception 2 (ci-après appelé filtre) implanté dans l'un au moins des routeurs du réseau. L'interception des paquets de contrôle RTCP étant coûteuse à mettre en oeuvre (notamment en raison du grand nombre de filtrages de micro flux dans un routeur de coeur), il est préférable de le faire dans des équipements, tels que les routeurs, proches des terminaux.

Préférentiellement, le filtre 2 intercepte tous les paquets de contrôle susceptibles d'être formatés selon le protocole RTCP. Mais, en variante, il peut effectuer un échantillonnage (ou filtrage) des paquets de contrôle, de manière à n'intercepter qu'un paquet de contrôle sur n (n étant une valeur entière choisie, par exemple égale à 2 ou 3).

L'interception ayant pour objet de ne « retenir » que les paquets de contrôle RTCP, le filtre 2 doit par conséquent analyser les paquets en cours de transfert. Cette analyse porte préférentiellement sur la vérification des valeurs d'au moins quatre (voire cinq) champs : le champ de numéro du protocole de l'entête IP (la valeur doit être UDP), le champ d'adresse réseau du terminal ayant émis le paquet, le champ d'adresse réseau du terminal destinataire du paquet, et le champ de port destinataire et/ou le champ de port émetteur. Un paquet qui présente au moins quatre (voire cinq) valeurs choisies de champs est un candidat à l'interception.

Ces valeurs choisies (également appelées filtres) sont préférentiellement transmises au dispositif (et notamment à son filtre 2) par une application, qui est éventuellement l'application de contrôle 1 destinataire des données dupliquées, ou par un autre équipement du réseau. La transmission de ces filtres (ou valeurs choisies) peut s'effectuer selon un protocole tel que COPS.

Le dispositif selon l'invention comporte également au moins un module de gestion 3 implanté dans un équipement du réseau, par exemple celui qui comporte le module d'interception 2, avec lequel il constitue alors le filtre (comme illustré). Dans ce qui suit, on désignera par filtre aussi bien le module d'interception 2 que le module de gestion 3.

Chaque module de gestion 3 est conçu pour dupliquer une partie au moins de chaque paquet de contrôle intercepté puis communiqué par le module d'interception 2 auquel il est associé, et pour générer des données représentatives de la partie dupliquée, afin qu'elles soient communiquées à l'application de contrôle 1. La communication de la partie dupliquée peut être immédiate ou différée. Dans le cas différé, les parties dupliquées sont stockées dans des fichiers de journalisation (ou « log ») avant d'être communiquées à l'application de contrôle 1.

Entre les étapes d'interception et de duplication, on peut prévoir une étape de filtrage consistant à ne communiquer en vue de la duplication que les paquets de contrôle RTCP comportant un champ d'informations de service dont la valeur est supérieure à une valeur seuil. On peut en effet considérer qu'en deçà de cette valeur seuil la qualité du service est acceptable et que de ce fait il n'y a pas lieu de faire remonter l'information jusqu'à l'application de contrôle 1. Par exemple la valeur seuil concernant le pourcentage de paquets perdus est choisie égale à 1%, de sorte que tout paquet de contrôle RTCP présentant une perte supérieure à 1% fasse l'objet d'un « rapport » par duplication.

Il est bien évident que cette notion de seuil est relative. La comparaison peut en effet être réalisée sur la valeur du pourcentage de paquets transmis. Dans ce cas, on ne communiquerait en vue de la duplication que les paquets de contrôle RTCP comportant un champ d'informations de service dont la valeur serait inférieure à une valeur seuil, par exemple 99 %.

Par ailleurs, le filtrage peut porter sur les valeurs de plusieurs champs d'informations de service. Dans ce cas, on prévoit une valeur seuil pour chaque champ devant faire l'objet d'une comparaison.

Afin d'effectuer le filtrage, le module d'interception 2 est donc agencé de manière à détecter le champ d'informations de service, objet de la comparaison, contenu dans les paquets interceptés, puis à extraire sa valeur pour la comparer à la valeur seuil choisie stockée. Une fois la comparaison effectuée, le traitement du paquet se poursuit normalement dans le routeur (ou équipement de réseau) et une copie d'une partie au moins du paquet est communiquée au module de gestion 3 selon que la valeur de son champ d'informations de service est inférieure ou supérieure au seuil.

Préférentiellement, le module de gestion 3 duplique tout ce qu'il a reçu du module d'interception 2, qu'il s'agisse de l'intégralité d'un paquet de contrôle ou seulement de parties de celui-ci. Mais, en variante on peut envisager que le module de gestion 3 soit agencé de manière à ne dupliquer qu'une partie des données qu'il a reçues. Cette situation peut notamment être envisagée lorsque le module d'interception 2 lui communique l'intégralité du paquet de contrôle intercepté. En revanche cette solution ne présente pas de réel intérêt lorsque le module d'interception ne transmet qu'une partie seulement du paquet de contrôle intercepté, par exemple le champ d'adresse réseau du terminal ayant émis le paquet, le champ d'adresse réseau du terminal destinataire du paquet, le champ de port destinataire, le champ de numéro de protocole, et le ou les champs d'informations de service contenus dans le paquet.

Il est important de noter que le module de gestion 3 peut être agencé de manière à communiquer des données d'information qui représentent le ou les champs d'informations de service, plutôt que les contenus de ces champs. Par exemple, un champ peut être remplacé par une alarme ou un bit dont la valeur 0 ou 1 indique qu'un paquet RTP a été perdu ou transmis.

La transmission (ou communication) des éléments dupliqués, issus des paquets de contrôle RTCP, entre le module de gestion 3 et l'application de contrôle 1 peut être effectuée par tout moyen approprié. On peut par exemple utiliser le protocole COPS (pour Common Open Policy Service - RFC 2748) couplé à une PIB (pour Policy information Base) de demande de duplication de paquets, ou le protocole de gestion et d'administration de réseau SNMP (pour Simple Network Management Protocol - RFC 1157) couplé à une MIB (pour Management information Base), ou encore le protocole CMIS/CMIP également couplé à une MIB.

Les modules d'interception, de gestion et de contrôle peuvent être respectivement réalisés sous la forme de circuits électroniques, de modules logiciels (ou informatiques), ou d'une combinaison de circuits et de logiciels. Par ailleurs, les modules de gestion et d'interception peuvent être regroupés en un même module formant un filtre.

Par ailleurs, le dispositif peut être configurable en fonction des utilisateurs. On peut en effet envisager plusieurs niveaux de seuil différents associés à des catégories de service différentes.

D'autre part, les modules présentés ci-avant, qui constituent le dispositif selon l'invention, peuvent être implantés dans tout type d'équipement du réseau dès lors que cet équipement est installé sur le trajet des paquets de contrôle formatés selon le premier protocole (ici RTCP). Parmi ces équipements on peut notamment citer les routeurs (périphériques ou de coeur), les pare-feux, les « NAT box » (pour Network Address Translation box) ou les « Traffic Shaper » (gestionnaires de trafic).

En outre, il est possible d'utiliser l'application de contrôle, par exemple implantée dans le serveur S, pour transmettre des filtres (par exemple les quatre (voire cinq) valeurs choisies des champs précités et/ou des valeurs de seuils) aux équipements dans lesquels sont implantés les modules constituants le dispositif selon l'invention.

L'invention offre également un procédé d'interception des données de contrôle échangées par des terminaux distants, via un réseau de communications, sous la forme de paquets de contrôle formatés selon un premier protocole de contrôle de transfert de données en temps réel (tel que par exemple RTCP) et associées à des données précédemment échangées par ces terminaux (généralement sous la forme de paquets formatés selon un second protocole de transfert de données en temps réel (tel que par exemple RTP)).

Celui-ci peut être mis en oeuvre à l'aide du dispositif présenté ci-avant. Les fonctions et sous-fonctions principales et optionnelles assurées par les étapes de ce procédé étant sensiblement identiques à celles assurées par les différents moyens constituant le dispositif, seules seront résumées ci-après les étapes mettant en oeuvre les fonctions principales du procédé selon l'invention.

Ce procédé comporte une étape dans laquelle, i) on intercepte certains au moins des paquets de données de contrôle qui sont en cours de transfert sur le réseau entre au moins deux terminaux distants, de manière à déterminer ceux qui sont formatés selon le premier protocole (ici RTCP), puis ii) on duplique une partie au moins de chaque paquet de contrôle ainsi formaté, et iii) on communique à une application de contrôle implantée dans le réseau, des données représentatives de la partie dupliquée, de sorte qu'elle en déduise des informations sur le transfert (et principalement la qualité de service dans le cas du protocole RTCP).

L'invention ne se limite pas aux modes de réalisation de procédés et dispositifs décrits ci-avant, seulement à titre d'exemple, mais elle englobe toutes les variantes que pourra envisager l'homme de l'art dans le cadre des revendications ci-après.

## Revendications

1. Procédé d'interception de données échangées par des terminaux distants (Tij-k), via un réseau de communications, sous forme de paquets de contrôle formatés selon un premier protocole de contrôle de transfert de données en temps réel et associées à des données précédemment échangées par lesdits terminaux, **caractérisé en ce qu'**il comporte une étape dans laquelle, i) en cas de transfert de paquets de données entre au moins deux terminaux distants (Tij-k), on intercepte certains au moins desdits paquets pendant ledit transfert de manière à déterminer ceux qui sont formatés selon ledit premier protocole, puis ii) on duplique une partie au moins de chaque paquet ainsi formaté, dit « paquet de contrôle », et iii) on communique à une application de contrôle (1) implantée dans ledit réseau, des données représentatives de ladite partie dupliquée, de sorte qu'elle en déduise des informations sur ledit transfert.

2. Procédé selon la revendication 1, **caractérisé en ce que** l'on intercepte tous les paquets de contrôle transférés.

3. Procédé selon la revendication 1, **caractérisé en ce que** l'on échantillonne les paquets de contrôle de manière à n'intercepter qu'un échantillon parmi n, n étant une valeur entière choisie.

4. Procédé selon l'une des revendications 1 à 3, **caractérisé en ce que** la détermination du formatage selon le premier protocole porte sur la détermination parmi les paquets de ceux dont au moins un champ d'adresse réseau du terminal émetteur du paquet, un champ d'adresse réseau du terminal destinataire du paquet, un champ de port destinataire et/ou un champ de port émetteur, et un champ de numéro de protocole présentent des valeurs choisies.

5. Procédé selon la revendication 4, **caractérisé en ce que** lesdites valeurs choisies sont communiquées par une application et/ou un équipement du réseau.

6. Procédé selon l'une des revendications 1 à 5, **caractérisé en ce que**, entre l'interception et la duplication, on effectue une comparaison entre une valeur seuil choisie et la valeur d'un champ d'informations de service contenu dans le paquet de contrôle intercepté, de manière à ne dupliquer que la partie au moins du paquet de contrôle dont le champ d'informations de service présente une valeur sensiblement supérieure à ladite valeur seuil.

7. Procédé selon la revendication 6, **caractérisé en ce que** l'on duplique l'intégralité de chaque paquet de contrôle intercepté, formaté selon le premier protocole et dont le champ d'informations de service présente une valeur sensiblement supérieure à ladite valeur seuil, et **en ce que** l'on communique l'intégralité dudit paquet de contrôle dupliqué.

8. Procédé selon la revendication 6, **caractérisé en ce que** l'on duplique certains champs choisis contenus dans chaque paquet de contrôle intercepté, formaté selon le premier protocole et dont le champ d'informations de service présente une valeur sensiblement supérieure à ladite valeur seuil, et **en ce que** l'on communique lesdits champs dupliqués.

9. Procédé selon la revendication 8, **caractérisé en ce que** l'un des champs dupliqués et communiqués est ledit champ d'informations de service.

10. Procédé selon la revendication 8, **caractérisé en ce que** l'on duplique également ledit champ d'informations de service, et **en ce que** l'on communique avec les autres champs dupliqués des données d'information représentatives dudit champ d'informations de service dupliqué.

11. Procédé selon l'une des revendications 1 à 5, **caractérisé en ce que** l'on duplique certains champs choisis contenus dans chaque paquet de contrôle intercepté, formaté selon le premier protocole, dont au moins un champ d'informations de service.

12. Procédé selon la revendication 11, **caractérisé en ce que** l'on communique avec les autres champs dupliqués des données d'information représentatives dudit champ d'informations de service dupliqué.

13. Procédé selon l'une des revendications 6 à 12, **caractérisé en ce que** le champ d'informations de service comporte des données représentatives de la qualité de service.

14. Procédé selon la combinaison de la revendication 4 avec l'une des revendications 8 à 13, **caractérisé en ce que** l'on duplique ledit champ d'adresse réseau du terminal émetteur du paquet, ledit champ d'adresse réseau du terminal destinataire du paquet, ledit champ de port destinataire et ledit champ de numéro de protocole, détectés.

15. Procédé selon l'une des revendications 1 à 5, **caractérisé en ce que** l'on duplique l'intégralité de chaque paquet de contrôle intercepté, formaté selon le premier protocole.

16. Dispositif d'interception de données échangées par des terminaux distants (Tij-k), via un réseau de communications, sous forme de paquets formatés selon un premier protocole de contrôle de transfert de données en temps réel et associées à des données précédemment échangées par lesdits terminaux, **caractérisé en ce qu'**il comporte des moyens d'interception (2) propres, en cas de transfert de paquets de données entre au moins deux terminaux distants (Tij-k), à intercepter certains au moins desdits paquets pendant ledit transfert, et à déterminer parmi les paquets interceptés ceux qui sont formatés selon ledit premier protocole, dits « paquets de contrôle », et des moyens de gestion (3) propres à dupliquer une partie au moins de chaque paquet de contrôle intercepté, et à générer des données, représentatives de ladite partie dupliquée, destinées à être communiquées à des moyens de contrôle (1), implantés dans une application de contrôle (S) dudit réseau.

17. Dispositif selon la revendication 16, **caractérisé en ce que** lesdits moyens d'interception (2) sont agencés pour intercepter tous les paquets de contrôle transférés en vue de déterminer leur format.

18. Dispositif selon la revendication 17, **caractérisé en ce que** lesdits moyens d'interception (2) sont agencés pour échantillonner les paquets de contrôle en cours de transfert, et pour n'intercepter qu'un échantillon parmi n, n étant une valeur entière choisie, en vue de déterminer son format.

19. Dispositif selon l'une des revendications 16 à 18, **caractérisé en ce que** lesdits moyens d'interception (2) sont agencés pour i) détecter parmi les paquets ceux dont au moins un champ d'adresse réseau du terminal émetteur du paquet, un champ d'adresse réseau du terminal destinataire du paquet, un champ de port destinataire et/ou un champ de port émetteur, et un champ de numéro de protocole, présentent des valeurs choisies, et ii) retenir les paquets présentant lesdites valeurs choisies, ces paquets étant alors dits paquets de contrôle interceptés.

20. Dispositif selon la revendication 19, **caractérisé en ce que** lesdits moyens d'interception (2) sont agencés pour recevoir lesdites valeurs choisies d'une application et/ou d'un équipement du réseau.

21. Dispositif selon l'une des revendications 16 à 20, **caractérisé en ce que** lesdits moyens d'interception (2) sont agencés pour détecter un champ d'informations de service contenu dans chaque paquet de contrôle intercepté, et pour effectuer, entre l'interception et la duplication, une comparaison entre une valeur seuil choisie stockée et la valeur du champ d'informations de service détecté, de sorte que les moyens de gestion (3) ne dupliquent que la partie au moins du paquet de contrôle dont le champ d'informations de service présente une valeur sensiblement supérieure à ladite valeur seuil.

22. Dispositif selon la revendication 21, **caractérisé en ce que** lesdits moyens d'interception (2) sont agencés pour communiquer auxdits moyens de gestion (3) l'intégralité de chaque paquet de contrôle intercepté dont le champ d'informations de service présente une valeur sensiblement supérieure à ladite valeur seuil, et **en ce que** lesdits moyens de gestion (3) sont agencés pour dupliquer l'intégralité de chaque paquet de contrôle intercepté reçu, et communiquer auxdits moyens de contrôle l'intégralité dudit paquet de contrôle dupliqué.

23. Dispositif selon la revendication 21, **caractérisé en ce que** lesdits moyens d'interception (2) sont agencés pour communiquer auxdits moyens de gestion (3) certains champs choisis contenus dans chaque paquet de contrôle intercepté dont le champ d'informations de service présente une valeur sensiblement supérieure à ladite valeur seuil, et **en ce que** lesdits moyens de gestion (3) sont agencés pour dupliquer lesdits champs choisis de chaque paquet de contrôle intercepté reçu et communiquer auxdits moyens de contrôle lesdits champs dupliqués.

24. Dispositif selon la revendication 23, **caractérisé en ce que** l'un des champs dupliqués et communiqués est ledit champ d'informations de service.

25. Dispositif selon la revendication 23, **caractérisé en ce que** lesdits moyens d'interception (2) sont agencés pour communiquer auxdits moyens de gestion (3) ledit champ d'informations de service, et **en ce que** lesdits moyens de gestion (3) sont agencés pour dupliquer ledit champ d'informations de service et communiquer avec les autres champs dupliqués des données d'information représentatives dudit champ d'informations de service dupliqué.

26. Dispositif selon l'une des revendications 16 à 20, **caractérisé en ce que** lesdits moyens de gestion (3) sont agencés pour dupliquer certains champs choisis contenus dans chaque paquet de contrôle intercepté, formaté selon le premier protocole, dont au moins un champ d'informations de service.

27. Dispositif selon l'une des revendications 23 à 26, **caractérisé en ce que** lesdits moyens de gestion (3) sont agencés pour communiquer des données d'informations, représentatives dudit champ d'informations de service dupliqué, en complément des autres champs dupliqués.

28. Dispositif selon l'une des revendications 21 à 27, **caractérisé en ce que** le champ d'informations de service comporte des données représentatives de la qualité de service.

29. Dispositif selon la combinaison de la revendication 19 avec l'une des revendications 21 à 28, **caractérisé en ce que** lesdits moyens de gestion (3) sont agencés pour dupliquer ledit champ d'adresse réseau du terminal émetteur du paquet intercepté, ledit champ d'adresse réseau du terminal destinataire du paquet de contrôle intercepté, ledit champ de port destinataire et ledit champ de numéro de protocole, et pour communiquer lesdits champs dupliqués aux moyens de contrôle (1).

30. Dispositif selon l'une des revendications 16 à 20, **caractérisé en ce que** lesdits moyens de gestion (3) sont agencés pour dupliquer l'intégralité de chaque paquet de contrôle intercepté, formaté selon le premier protocole, et pour communiquer auxdits moyens de contrôle (1) l'intégralité dudit paquet de contrôle dupliqué.

31. Dispositif selon l'une des revendications 16 à 30, **caractérisé en ce que** lesdits moyens d'interception (2) sont implantés dans l'un au moins des équipements du réseau par lesquels circulent les flux destinés auxdits terminaux.

32. Dispositif selon l'une des revendications 16 à 31, **caractérisé en ce que** lesdits moyens de gestion (3) sont implantés dans l'un au moins des équipements (RC-k ;RPj-k) du réseau auquel sont raccordés lesdits terminaux (Tij-k).

33. Dispositif selon l'une des revendications 31 et 32, **caractérisé en ce que** l'équipement du réseau est choisi dans un groupe comprenant les routeurs, les « NAT box », les pare-feux et les « traffic shaper ».

34. Utilisation des procédé et dispositif selon l'une des revendications précédentes dans les réseaux choisis parmi les réseaux publics et privés.

35. Utilisation selon la revendication 34, **caractérisée en ce que** le réseau est Internet.

36. Utilisation selon l'une des revendications 34 et 35, **caractérisée en ce que** le premier protocole est nommé RTCP, et est associé à un protocole de transfert de données en temps réel nommé RTP.

37. Utilisation selon l'une des revendications 34 à 36, **caractérisée en ce que** la communication des données dupliquées s'effectue selon un protocole choisi dans un groupe comprenant les protocoles COPS et SNMP, et les protocoles d'encapsulation.
